Europäisches Patentamt

European Patent Office

Office européen des brevets

(11) Publication number: 0 266 930
A1

# EUROPEAN PATENT APPLICATION

(21) Application number: 87309162.3

(22) Date of filing: 16.10.87

(51) Int. Cl.4: F16G 13/12 , B65G 19/20

(30) Priority: 20.10.86 GB 8625128

(43) Date of publication of application:
11.05.88 Bulletin 88/19

(84) Designated Contracting States:
AT DE ES FR GB

(71) Applicant: PARSONS CHAIN COMPANY
LIMITED
Stourport-on-Severn
Worcestershire DY13 9AT(GB)

(72) Inventor: Millington, Michael John
24 Kendalwood Road
Kidderminster Worcestershire DY10
2XQ(GB)
Inventor: Starkey, George Edward
2 Paton Grove Drinington
Chesterfield Derbyshire S43 1LQ(GB)
Inventor: Taylor, David
16 The Meadows
Houghton-Le-Spring Tyne & Wear, DH4
6HG(GB)

(74) Representative: Lewis, David Overington
c/o Babcock International plc 165 Great
Dover Street
London SE1 4YA(GB)

(54) Chains and chain conveyors.

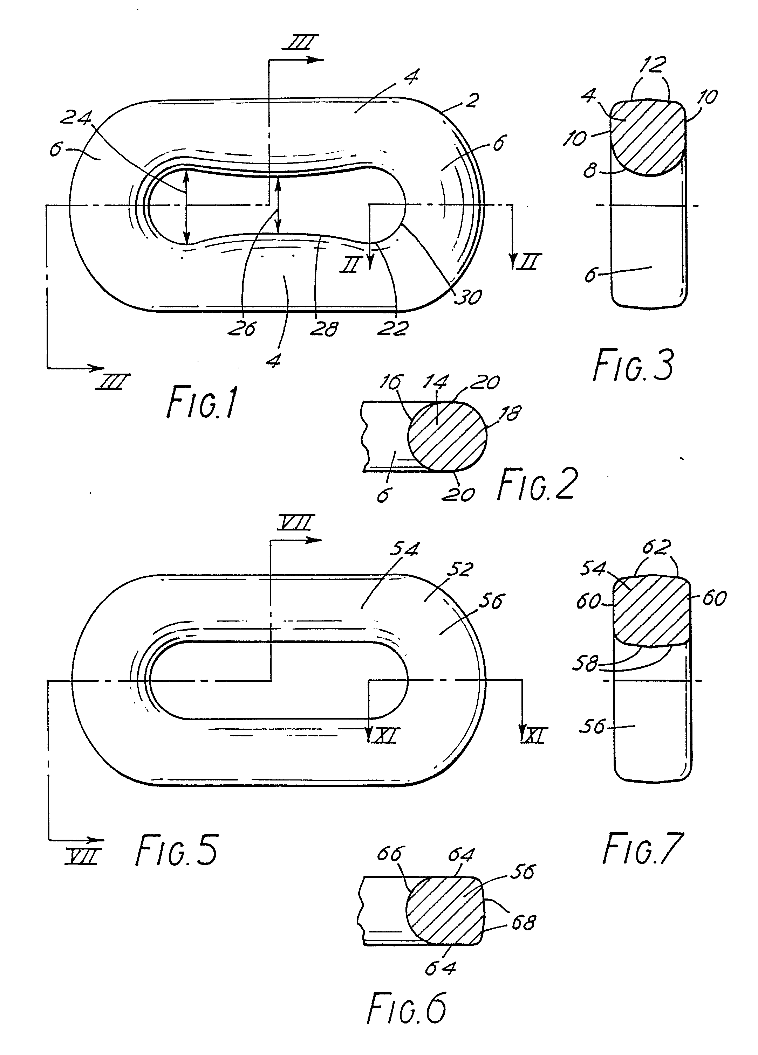

(57) Composite chain, particularly for a chain conveyor assembly, consists of horizontal links of conventional form alternating with vertical, compact, links 2 (Figs 1, 2 and 3). The compact links have side limbs 4 of enlarged cross-section compared with a conventional link, such as by having at least an outer portion approximating to square, rather than round, cross-section. End portions 6 have an increased bending strength compared with a conventional link, such as by having a cross-section approximating to an ellipse. Utilising such a composite chain enables a chain conveyor assembly to be upgraded in strength and carrying capacity without increasing the vertical dimension of pans of the conveyor assembly.

FIG.1

FIG.2

FIG.3

# CHAINS AND CHAIN CONVEYORS.

This invention relates to chain, and, more particularly, to chain for utilisation in connection with a chain conveyor assembly in which a pair of spaced endless chains interconnected at intervals with scraper bars travel in inwardly lipped pans to convey material along the pans, such as is disclosed in EP-A-0079409, or in which centrally disposed single or twin strand endless chains carrying flight bars at intervals travel in pans having constraints on the height of the links perpendicular to the base of the pans, such as is disclosed in GB-A-1335767.

In EP-A-0042283 there is disclosed a chain link having side limbs and end portions of a non-circular cross-section.

According to the present invention there is provided a chain link having side limbs and end portions of a non-circular cross-section in which, compared with a chain link of substantially uniform circular cross-section of the same strength and material, the external width across the link at the side limbs is reduced to give a link of compact form.

The invention also includes a chain conveyor assembly having a pair of spaced endless chains interconnected at intervals with scraper bars travelling in pans to convey material along the pans in which the chains are formed with links of conventional circular cross-sectional form arranged to travel with the plane containing the longitudinal axes of the side limbs of the link extending parallel to bases of the pans alternating with links of compact form arranged with the plane containing the longitudinal axes of the side limbs thereof extending perpendicular to the bases of the pans.

The invention will now be described, by way of example, with reference to the accompanying, partly diagrammatic, drawings, in which:-

Figure 1 is a side elevation of a compact chain link;

Figure 2 is a cross-section taken on the line II-II of Figure 1;

Figure 3 is a cross-section taken on the line III-III of Figure 1;

Figure 4 is a cross-sectional end elevation through a portion of a pan of a chain conveyor, the cross-section being taken through a compact chain link in an upper part of the pan and through a conventional chain link in a lower part of the pan, and indicating parts of associated scraper bars togther with shackle connectors;

Figure 5 is a side elevation of an alternative configuration of a compact chain link;

Figure 6 is a cross-section taken on the line VI-VI of Figure 5; and

Figure 7 is a cross-section taken on the line VII-VII of Figure 5.

In one embodiment of the invention, a compact chain link 2 such as for an endless chain conveyor assembly is of elongate forged form having side limbs 4 connecting end portions 6.

At a central portion, each side limb 4 is of a D-shaped cross-section, that is having a cross-section bounded by a semi-circular arc 8 and tangential lines 10 extending from, and forming a continuation of, the semi-circular arc intersecting with lines 12 arranged at an included angle of approximately 170° approximating to a straight line extending parallel to the diameter connecting the ends of the semi-circular arc, the intersections being smoothly radiused. The cross-section has an area somewhat greater than that of a circle of the same radius as the semi-circular arc and thus has a strength in tension substantially equal to a circular cross-section bar of such cross-sectional area. The pair of side limbs 4 of the link 2 are arranged in cross-section with the semi-circular arcs 8 adjoining and the lines 12 to the exterior of the link 2.

The end portions 6 of the link have central parts 14 of slightly elliptical cross-section consisting of a pair of semi-circular arcs 16, 18 spaced apart by a short distance and connected by common tangents 20 extending parallel to the longitudinal axes of the side limbs 4. The elliptical form enhances the bending strength of the section in a direction axial of the link 2.

The cross-sectional form of the central portion of the side limbs 4 and the cross-sectional form of the central parts of the end portions 6 are modified smoothly in progression toward the respective junctions of the side limbs and end portions to merge the two together with constant or substantially constant cross-sectional area. Adjacent the end portions 6, inner faces 22 of the side limbs 4 are relieved such that the distance 24 between the faces at the junctions between the side limbs and the end portions is slightly greater than the distance 26 between respective inner faces 28 at the central portions of the side limbs. The inner faces 30 of the end portions merge with the relieved portions of the inner faces 22 of the side limbs to form curved bearing surfaces corresponding to the respective inner faces of an interconnected link (not shown). The distance 26 between respective inner faces 28 is sufficient to permit free movement of an interconnected link. Alternatively, if it is desired to restrict the movement of the inter-connected link, the distance 26 may be made less than the limb diameter of the interconnected link.

Thus there is achieved a chain link having an external width across the side limbs 4 less than the external width of a conventional chain link of the same strength and formed with circular cross-section side limbs and end portions.

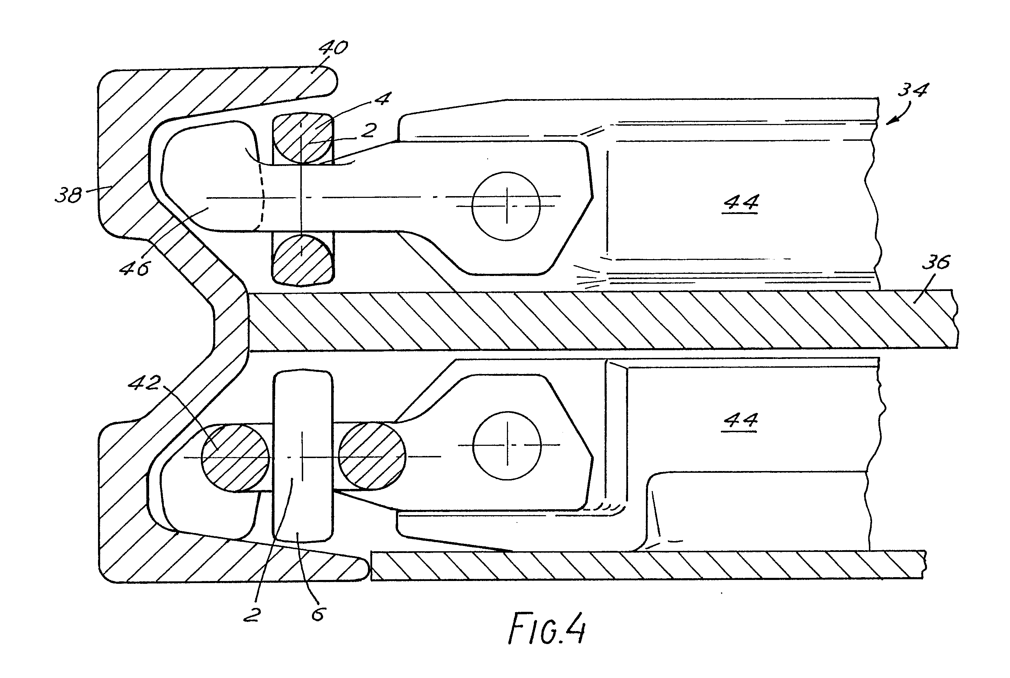

As shown in Figure 4, the links 2 may be used in conjunction with an endless chain conveyor assembly 34 in which there is a restriction on the vertical dimension of the chain links, that is, the dimension perpendicular to the a base 36 of pans 38 of the conveyor between the base and a constraint spaced from the base, such as an inwardly lipped flange 40, but not on the horizontal dimension, that is, the dimension in a plane parallel to the base 36 of the pans 38. A composite chain consisting of alternate links 42 of conventional form with the axes of the end portions and side limbs extending horizontally parallel to the base 36 of the pans 38 and links 2 of the above described compact form with axes of the end portions 6 extending vertically perpendicular to the base 36 of the pans 38 is provided, the conventional and compact links being of equivalent strength. The conventional links 42 are of welded construction thereby facilitating assembly of the chain. Scraper bars 44 and shackle connectors 46 conform to the restricted dimensions but are designed to withstand the increased loading. The strength of such a composite chain is greater than that of a chain composed entirely of links of conventional form of the same material and having an external width dimension equal to the external width dimension of the above described links 2 of compact form. This permits the utilisation of a chain of greater strength compared with a chain formed entirely of conventional links of the same material fitting within the inwardly lipped flanges of the pans without increasing the vertical dimension between the inward lip 40 and the base 36 of the pans. Similar considerations obtain in chain conveyor assemblies having chains spaced from the sides of the pans or centrally disposed chains where there is a constraint on the dimension of the chain links in a direction perpendicular to the base of the associated pans.

The cross-sectional form of the compact links may have configuration different from that shown in Figures 1 to 3. In the alternative configuration shown in Figures 5 to 7, a link 52 has side limbs 54 of cross-section approximating to a square and end portions 56 approximating to a D-shape. Thus, in cross-section, the side limbs 54 have parallel side faces 60 flanking inner and outer faces 58 and 62 each formed by linesmeeting at an included angle of approximately 170°, all of the intersections being rounded. Similarly, in cross-seciton, each end portion has parallel side faces 64 flanking an inner face formed as a semi-circle 66 and an outer face 68 formed by lines meeting at an included angle of approximately 170°, all of the intersections being rounded.

The cross-sectional form of the central portion of the side limbs 54 and the cross-sectional form of the central parts of the end portions 56 are modified smoothly in progression toward the respective junctions of the side limbs and end portions to merge the two together with constant or substantially constant cross-sectional area. Adjacent the end portions, the side faces 60 of the side limbs 54 are relieved to merge with the inner faces 66 of the end portions 56 to form curved bearing surfaces corresponding to the respective inner faces of the interconnected link (not shown). Such links 52 may be assembled into composite chains and utilised as described in conjunction with Figures 1 to 4.

The provision of vertically extending links of compact form permits of a greater conveying capacity for a conveyor of given dimensions. Thus an existing conveyor assembly may be upgraded in capacity by replacement of existing chains composed entirely of links of conventional form by composite chains of vertical links 2 or 52 of the above described compact form alternating with horizontal links 42 of conventional form but of a larger size than the replaced chain without increasing the strength of the material of the links. It will be understood that a corresponding modification will be required in pitch of the teeth the associated sprocket pulley wheels. Similarly, it will be understood that a modified form of shackle or connection will be required to connect the scraper bar either to the horizontally extending links or to the compact links to accommodate the combination of larger link and vertical dimension restrictions.

Where chains are supplied to dimensions in a range series of standard sizes, it is advantageous to arrange that in substituting an above-described composite chain for a conventional chain the links of compact form conform to the standard external width across the side limbs requirements and alternate in the chain with links of conventional form conforming with standard external width across the side limbs requirements of the respective next size up in the size range.

It will be appreciated that, in an alternative arrangement, a lower strength material of lower cost may be used for the composite chain whilst achieving the same or a slightly increased strength for the chain compared with a chain composed entirely of links of conventional form of the same vertical external width of a more expensive, high strength, material the horizontal widths of the links being increased appropriately.

It will also be appreciated that, in instances in which a chain of restricted width dimensions in two directions (for example, vertically and horizontally) is required, the chain may be composed entirely of links of compact width, provision being made for interconnecting the links during fabrication, such as cutting and welding the forged links.

It will further be appreciated that other configurations of cross-section of the side limbs and end portions may be utilised to achieve a reduced external width across the side limbs whilst retaining the requisite strength.

In an endless chain conveyor assembly utilising the above described composite chain, end pans of the conveyor may be modified to accommodate the increased chain horizontal width and strength by increasing the width of the inward lip on the flange and inclining the delivery end of the pan upwardly so that discharge is at a higher elevation than the pan run before the chains pass around a toothed drive pulley, the teeth of which engage the links with end portions extending in a plane parallel to the base of the pans, that is the horizontal links.

Whilst the length of the links of compact form would normally be equal to the length of the links of conventional form, other configurations may be utilised if required with the link of compact form having a length lesser or greater than the link of conventional form.

## Claims

1. A chain link having side limbs and end portions of a non-circular cross-section, characterised in that compared with a chain link of substantially uniform circular cross-section of the same strength and material, the external width across the link (2, 52) at the side limbs (4, 54) is reduced to give a link of compact form.

2. A chain link as claimed in Claim 1, characterised in that the side limbs (4, 54), over central portions thereof, have cross-sections approximating to square in the regions to the exterior of the link.

3. A chain link as claimed in Claim 1, or Claim 2, characterised in that the side limbs (4) have cross-sections approximating to semi-circular to the interior of the link.

4. A chain link as claimed in Claim 1, or Claim 2, characterised in that the side limbs (54) have cross-sections approximating to square to the interior of the link.

5. A chain link as claimed in any preceding claim, characterised in that the external faces of the respective central portions of the side limbs (4, 54) approximate to a pair of intersecting lines (12, 62) having an included angle of approximately 170°.

6. A chain link as claimed in any preceding claim, characterised in that the arrises formed at the intersections between adjoining lateral faces are smoothly radiused.

7. A chain link as claimed in any preceding claim, characterised in that central parts of the end portions (6) have a slightly elliptical cross-section elongated in the direction of the longitudinal axes of the side limbs (4).

8. A chain link as claimed in Claim 7, characterised in that the cross-section of the end portion (6) takes the form of two spaced semi-circles (16, 18) connected by common tangents (20).

9. A chain link as claimed in any preceding claim, characterised in that the cross-sectional form of the side limbs (4, 54) is merged into that of the end portions (6, 56) adjacent the junctions thereof by a progressive modification of the cross-section.

10. A chain link as claimed in any preceding claim, characterised in that the the interior faces of the end portions 6, 56) and adjacent parts of the side limbs (4, 54) are arranged to form a curved bearing surface for the respective interior face of an interlinked link.

11. A chain link as claimed in any preceding claim, characterised in that the distance (24) across the curved bearing surface is greater than the distance (26) between the interior faces of the central portions of the side limbs.

12. A chain conveyor assembly (34) having a pair of spaced endless chains interconnected at intervals with scraper bars (44) travelling in pans (38) to convey material along the pans, characterised in that the chains are formed with links (42) of conventional circular cross-sectional form arranged to travel with the plane containing the longitudinal axes of the side limbs of the link extending parallel to bases (36) of the pans (38) alternating with links (2, 52) of compact form as claimed in any preceding claim arranged with the plane containing the longitudinal axes of the side limbs thereof extending perpendicular to the bases (36) of the pans (38).

13. A chain conveyor assembly as claimed in Claim 12, characterised in that th= external width across the side limbs of the links (2, 52) of compact form corresponds, with suitable clearance, with the constrained dimension between the base (36) of the pans (38) and a constraint (40) spaced from the base (36), the size of the links (42) of conventional form being such as to give a chain of uniform strength greater than the strength of a chain composed entirely of links of conventional

form for a given material and having an external width across the side limbs equal to that of the links (2, 52) of compact form.

14. A chain conveyor assembly as claimed in Claim 12 or Claim 13, characterised in that the conventional chain links have a stepped range of standard sizes and the composite chain is composed of conventional links (42) of one standard size alternating with compact links (2, 52) corresponding in external width across the side limbs with the respective dimension of the next standard size down conventional link in the range.

III

24

6

4

2

6

II

II

26    28    22

30

4

**FIG.1**

III

12

4    10

10

8

6

**FIG.3**

16    14    20

18

6

20

**FIG.2**

VII

54

52

56

XI

XI

**FIG.5**

62

54

60    60

58

56

**FIG.7**

66    64

56

68

64

**FIG.6**

FIG.4

0 266 930

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 127 127 (GEWERKSCHAFT EISENHÜTTE WESTFALIA) * Abstract; figures * | 1 | F 16 G 13/12 B 65 G 19/20 |
| A | | 6,9,12, 13 | |
| | --- | | |
| X | DE-C- 939 545 (GEWERKSCHAFT EISENHÜTTE WESTFALIA) * Page 2, lines 55-101; figures * | 1 | |
| A | | 2,3,10, 12,13 | |
| | --- | | |
| P,X | DE-A-3 520 363 (FA. AUGUST THIELE) * Column 3, line 33 - column 4, line 30; figures * | 1 | |
| A | | 2,3,4,6 | |
| | --- | | |
| A | US-A-4 498 284 (G.E. GEARHART) * Column 2, lines 8-60; figures * | 1-3,6-9 | |
| | --- | | |
| A | DE-A-1 803 240 (RUD-KETTENFABRIK RIEGER & DIETZ) * Page 4, lines 9-26; figures * | 1-3,5 | **TECHNICAL FIELDS SEARCHED (Int. Cl.4)** B 65 G F 16 G |

The present search report has been drawn up for all claims

| Place of search | Date of completion of the search | Examiner |
|---|---|---|
| THE HAGUE | 29-02-1988 | VAN ROLLEGHEM F.M. |